# EUROPÄISCHE PATENTANMELDUNG

(11) **EP 2 474 460 A1**
(43) Veröffentlichungstag der Anmeldung: **11.07.2012**
(21) Anmeldenummer: 11195514.2
(22) Anmeldetag: 23.12.2011
(51) Int. Cl.: B62D 3/12, F16H 55/28

(54) **Zahnstangenlenkgetriebe**

(30) Priorität: 05.01.2011 DE 102011002463
(71) Anmelder: ZF Lenksysteme GmbH, 73527 Schwäbisch Gmünd (DE)
(72) Erfinder: Noder, Klaus, 73568 Durlangen (DE); Bareis, Helmut, 73569 Eschach (DE)

(57) **Zusammenfassung**

Bei einem Zahnstangenlenkgetriebe, insbesondere für Kraftfahrzeuge, mit einem Antriebsritzel (1), welches in eine in einem Lenkgetriebegehäuse (3) axial verschiebbar angeordnete Zahnstange (2) eingreift, ist die Zahnstange (2) über ein dem Antriebsritzel (1) gegenüberliegend in einer Bohrung im Lenkgetriebegehäuse (3) angeordnetes federbelastetes Druckstück (4) in Eingriff mit dem Antriebsritzel (1) gehalten. Das Druckstück (4) ist mit mindestens einem Dämpfungselement versehen ist, durch welches das Druckstück (4) auf einer Seite an die Innenwand (11) der Bohrung in dem Lenkgetriebegehäuse (3) angedrückt wird. Das wenigstens eine Dämpfungselement ist als Dämpfungsring (13) ausgebildet, der in einer Umfangsnut (12) in dem Druckstück (4) eingefügt ist.

## Beschreibung

Die Erfindung betrifft ein Zahnstangenlenkgetriebe nach der im Oberbegriff von Anspruch 1 näher definierten Art.

Zahnstangenlenkgetriebe dieser Art sind aus der DE 10 2004 017 259 A1 bekannt.

In einem Zahnstangenlenkgetriebe wird die Zahnstange durch ein federbelastetes Druckstück in spielfreiem Eingriff mit dem Antriebsritzel gehalten. Aufgrund von Fertigungstoleranzen benötigt das Druckstück jedoch in axialer Richtung ein Spiel. Auch in radialer Richtung zwischen der Druckstückbohrung in dem Lenkgetriebegehäuse und dem Außendurchmesser des Druckstücks wird ein minimales Spiel benötigt, um beweglich zu bleiben. Ein Problem dabei ist jedoch, dass bei einer ungünstigen Toleranzlage diese Spiele zu einer Geräuschentwicklung, nämlich einem Klappern des Druckstücks führen. Auch thermische Ausdehnungen können ebenfalls störende Geräusche ergeben. Insbesondere bei der Fertigung eines Druckstücks aus Kunststoff tritt diese Problematik auf, da bei einer wirtschaftlichen Fertigung die Fertigungstoleranzen und die thermische Ausdehnung eine noch größere Rolle spielen.

In der EP 1 084 933 B1 ist deshalb bereits vorgeschlagen worden, das Druckstück schräg zu stellen. Durch die Schrägstellung und durch die Druckfeder sich ergebenden radialen Kraftkomponente wird das Druckstück stets in Anlage gegen eine Seite der Bohrung in dem Lenkgetriebegehäuse gehalten. Alternativ zu dieser Lösung wurde vorgeschlagen einen Dichtungsring in einer exzentrischen Ringnut im Druckstück derart anzuordnen, dass das Druckstück einseitig in seiner Bohrung anliegt. Durch diese Maßnahmen werden Vibrationen und damit Klappererscheinungen vermieden. Nachteilig dabei ist jedoch der für diese Ausbildungen erforderliche Mehraufwand für Fertigung und Montage.

In der DE 10 2004 017 259 A1 ist bereits vorgeschlagen worden, das Druckstück mit drei axial verlaufenden Längsnuten zu versehen, in die Dämpfungselemente in Leistenform eingesetzt sind. Die Dämpfungsleisten befinden sich in einem Abstand von 45 Grad auf einer Umfangsseite des Druckstücks und stehen über die Umfangswand des Druckstücks vor. Durch diese Ausbildung wird das Druckstück auf der gegenüberliegenden Bohrungswand an diese angedrückt. Durch eine elastische Ausbildung der Dämpfungsleisten wird auf diese Weise eine Spielfreiheit erreicht und damit eine Geräuschentwicklung vermieden. Die Dämpfungsleisten sind innen jeweils mit zwei Ansätzen versehen, durch die sie in Bohrungen am Grunde der jeweiligen Längsnut befestigt sind.

Nachteilig bei diesem Zahnstangenlenkgetriebe ist jedoch, dass auch bei dieser Lösung sowohl die Herstellung als auch die Montage relativ aufwändig ist.

Der vorliegenden Erfindung liegt daher die Aufgabe zugrunde, ein Zahnstangenlenkgetriebe zu schaffen, das die eingangs erwähnte Problematik durch unterschiedliche Toleranzen und durch eine thermische Ausdehnung mit einfacheren Mitteln löst.

Erfindungsgemäß wird diese Aufgabe durch die im kennzeichnenden Teil von Anspruch 1 genannten Merkmale gelöst.

Bei der Ausbildung des Dämpfungselements durch wenigstens einen Dämpfungsring, der als Spritzgussteil ein- oder anspritzbar ist, wird die vorstehend genannte Problematik auf relativ einfache Weise gelöst. Dies beruht insbesondere darauf, dass sowohl der wenigstens eine Dämpfungsring als auch das Druckstück jeweils als Spritzgussteil ausgebildet ist, wobei der wenigstens eine Dämpfungsring zusammen bzw. gleichzeitig beim Spritzvorgang für das Druckstück ein- oder anspritzbar ist.

So kann zum Beispiel das Druckstück als Mehrkomponentenspritzgussteil ausgeführt werden, wobei der Dämpfungsring gleichzeitig bei der Herstellung des Druckstücks in die Umfangsnut des Druckstücks ein- bzw. aufgespritzt wird. Auf diese Weise wird eine unlösbare Verbindung zwischen dem Druckstück und dem Dämpfungsring geschaffen, wodurch auch bei der nachfolgenden Montage kein gesonderter Arbeitsgang für das Einbringen des oder der Dämpfungsringe erforderlich ist.

Um die gewünschte Anlage des Druckstücks auf einer Seite an die Innenwand der Bohrung in dem Lenkgetriebegehäuse zu erreichen, sind verschiedene Möglichkeiten denkbar.

In einer vorteilhaften Ausgestaltung kann vorgesehen sein, dass der Nutgrund der Umfangsnut exzentrisch mit unterschiedlicher Tiefe über den Umfang ausgebildet ist. Wird in diesem Fall ein kreisförmiger elastischer Dämpfungsring in die Nut entweder als separates Teil oder in einem Spritzvorgang eingebracht, wobei dessen radiale Erstreckung so gewählt ist, dass er in einem Umfangsbereich über den Umfang des Druckstücks übersteht bzw. weiter übersteht als auf der gegenüberliegenden Seite, so wird die Andrückung des Druckstücks an die Innenwand der Bohrung auf einfache Weise erreicht.

Alternativ dazu ist es im Rahmen der Erfindung jedoch auch möglich, dass der Dämpfungsring exzentrisch ausgebildet ist.

Auch auf diese Weise wird das Druckstück auf der von dem exzentrisch überstehenden Bereich abgewandten Seite an die Innenwand angedrückt.

Eine andere bzw. weitere Ausgestaltung des Dämpfungsrings kann darin bestehen, dass er mit ein oder mehreren über den Umfang vorstehenden Erhöhungen versehen ist, die sich über einen Teil der Umfangswand erstrecken.

Anstelle eines über einen Teilbereich der Umfangswand des Druckstücks vorstehenden Exzenterbereichs sind in diesem Falle ein oder mehrere, vorzugsweise zwei bis drei, radiale Erhöhungen bzw. Ausbuchtungen vorgesehen, die den gleichen Andrückeffekt auf der gegenüberliegenden Seite bewirken. Der Vorteil dieser Ausgestaltung liegt darin, dass die Reibungskräfte zwischen dem Druckstück und der Bohrung geringer sind.

Als Material für den wenigstens einen Dämpfungsring wird man einen Kunststoff verwenden, der gute elastische Eigenschaften besitzt. Hierfür kann zum Beispiel Silikon vorgesehen sein.

Für das Druckstück kann glasfaserverstärkter Kunststoff in vorteilhafter Weise verwendet werden.

Weitere vorteilhafte Ausgestaltungen und Weiterbildungen der Erfindung ergeben sich aus den übrigen Unteransprüchen und aus den nachfolgend anhand der Zeichnung näher beschriebenen Ausführungsbeispielen.

Es zeigt:
- Fig. 1: ausschnittsweise eine perspektivische Darstellung des Lenkgetriebes mit Antriebsritzel, Zahnstange und Druckstück;
- Fig. 2: eine Schnittdarstellung durch das Lenkgetriebe im Bereich des Druckstücks mit einem Dämpfungsring;
- Fig. 3: eine Schnittdarstellung durch das erfindungsgemäße Druckstück mit zwei auf Abstand voneinander angeordneten Dämpfungsringen;
- Fig. 4: einen Querschnitt nach der Linie IV-IV in der Fig. 2 ohne Lenkgetriebegehäuse; und
- Fig. 5: einen Querschnitt ähnlich dem Querschnitt nach der Fig. 4 mit einem Dämpfungsring, der radial vorstehende Erhöhungen aufweist.

Da Lenkgetriebe dieser Art allgemein bekannt sind, wozu zum Beispiel auf die eingangs erwähnten Druckschriften verwiesen wird, wird nachfolgend nur auf die für die Erfindung wesentlichen Teile näher eingegangen.

Ein Antriebsritzel 1 steht in bekannter Weise mit einer Zahnstange 2 in Zahneingriff.

Auf der von dem Antriebsritzel 1 abgewandten Seite der Zahnstange 2 ist ein in einem Lenkgetriebegehäuse 3 angeordnetes Druckstück 4 angedrückt.

Das Druckstück 4 wird durch eine Nachstelleinrichtung 5, die eine Stellschraube 6 und eine Druckfeder 7 aufweist, in bekannter Weise an die Zahnstange 2 angedrückt.

In ebenfalls bekannter Weise ist ein Gleitelement 8 zwischen der Zahnstange 2 und dem Druckstück 4 vorgesehen, wobei das Gleitelement mit einem Absatz 9 zur Verbindung mit dem Druckstück 4 versehen ist.

Ein Dichtelement 10 zwischen der Innenwand 11 der Bohrung in dem Lenkgetriebegehäuse 3 und der Stellschraube 6 sorgt für eine Abdichtung.

In eine Umfangsnut 12 des Druckstücks 4 ist ein Dämpfungselement in Form eines Dämpfungsrings 13 eingesetzt.

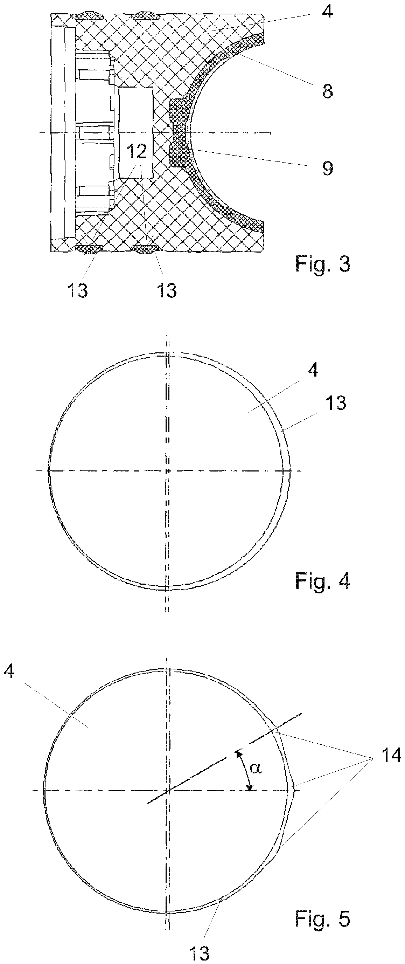

Wie aus der Fig. 4 ersichtlich ist, ist der Dämpfungsring 13 derart in der Umfangsnut 12 des Druckstücks 4 angeordnet, dass er über einen Teilbereich der Umfangswand des Druckstücks 4 über diese hinaus übersteht. Durch eine elastische Ausbildung des Druckrings 13 bei entsprechenden Durchmesserverhältnissen zwischen dem Außendurchmesser des Dämpfungsrings 13 und dem Durchmesser der Bohrung 11 wird dieser damit sicher auf der von dem überstehenden Bereich abgewandten Seite an die Innenwand 11 der Bohrung angedrückt. Auf diese Weise ist eine radiale Spielfreiheit gewährleistet. Der vorstehende Bereich des Druckrings 13 kann sich über einen Umfangsgrad von 180 Grad oder etwas mehr erstrecken. Alternativ dazu ist es auch möglich, den Druckring 13 mit ein oder mehreren, wie in der Fig. 5 dargestellt drei radial vorstehenden Erhöhungen 14 zu versehen.

Der gesamte Umfangsbereich zwischen den einzelnen Erhöhungen 14 kann sich über 90 Grad erstrecken. Bei dem Ausführungsbeispiel nach der Fig. 5 beträgt der Umfangswinkel jeweils zwischen zwei Erhöhungen 30 Grad. Selbstverständlich sind jedoch im Rahmen der Erfindung auch noch andere Winkel möglich.

Anstelle einer exzentrischen Ausbildung des Druckrings 13 ist es jedoch auch möglich, den Nutgrund der Umfangsnut 12 in dem Druckstück 4 mit unterschiedlicher Tiefe über den Umfang verteilt auszubilden. Bei Einbringung eines ringförmigen Druckrings ergibt sich damit aufgrund der unterschiedlichen Nuttiefe ebenfalls eine Exzentrizität, wenn der Nutgrund entsprechend so ausgebildet ist, dass der eingebrachte Dämpfungsring über einen Teilbereich über den Umfang des Druckstücks vorsteht.

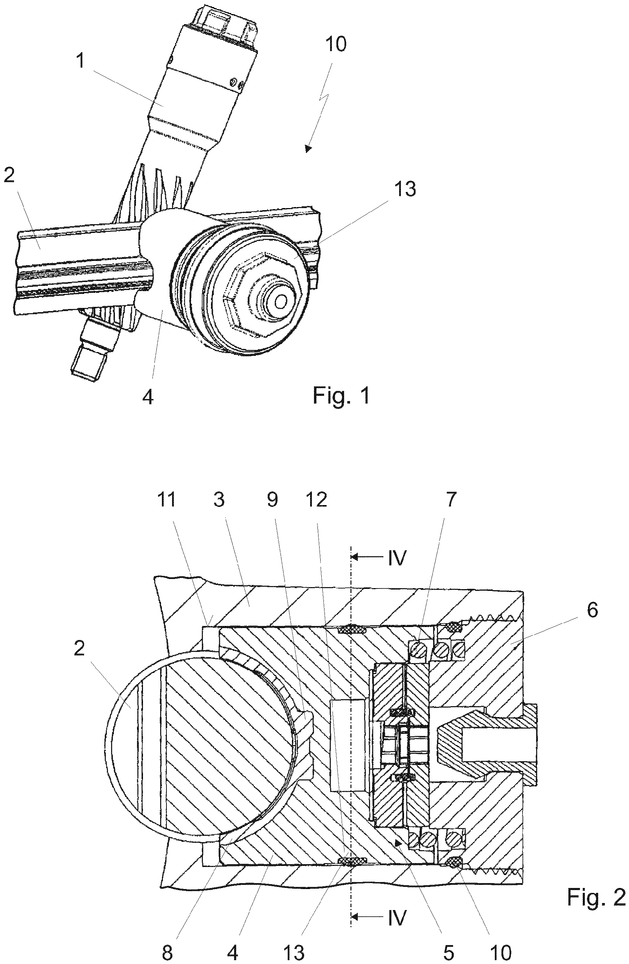

In der Fig. 2 ist ein Dämpfungsring für das Druckstück 4 vorgesehen. Alternativ dazu ist in der Fig. 3 eine Ausgestaltung der Erfindung dargestellt, wobei zwei axial auf Abstand voneinander angeordnete Dämpfungsringe vorgesehen sind, die ebenfalls jeweils in einer Umfangsnut in dem Druckstück 4 angeordnet sind. Diese Ausgestaltung hat den Vorteil einer sichereren, kippfreien Lagerung des Druckstücks und einer besseren Führung.

Der Dichtungsring nach der Fig. 2 bzw. die beiden Dichtungsringe 13 nach der Fig. 3 werden in einem Arbeitsgang bei der Herstellung des Druckstücks als Spritzgussteil gleichzeitig in das Druckstück eingespritzt werden.

### Bezugszeichenliste

- 1: Antriebsritzel
- 2: Zahnstange
- 3: Lenkgetriebegehäuse
- 4: Druckstück
- 5: Nachstelleinrichtung
- 6: Stellschraube
- 7: Druckfeder
- 8: Gleitelement
- 9: Absatz
- 10: Dichtelement
- 11: Innenwand
- 12: Umfangsnut
- 13: Dämpfungsring
- 14: Erhöhungen

## Patentansprüche

1. Zahnstangenlenkgetriebe, insbesondere für Kraftfahrzeuge, mit einem Antriebsritzel (1), welches in eine in einem Lenkgetriebegehäuse (3) axial verschiebbar angeordnete Zahnstange (2) eingreift, wobei die Zahnstange (2) über ein dem Antriebsritzel (1) gegenüberliegend in einer Bohrung im Lenkgetriebegehäuse (3) angeordnetes federbelastetes Druckstück (4) in Eingriff mit dem Antriebsritzel (1) gehalten ist, und wobei das Druckstück (4) mit mindestens einem Dämpfungselement versehen ist, durch welches das Druckstück (4) auf einer Seite an die Innenwand (11) der Bohrung in dem Lenkgetriebegehäuse (3) angedrückt wird, **dadurch gekennzeichnet, dass** das wenigstens eine Dämpfungselement als Dämpfungsring (13) ausgebildet ist, der in eine Umfangsnut (12) in dem Druckstück (4) eingefügt ist, und dass das Druckstück (4) als Spritzgussteil ausgebildet ist, wobei der wenigstens eine Dämpfungsring (13) ebenfalls als Spritzgussteil ausgebildet ist, das beim Spritzvorgang für das Druckstück (4) ein-oder anspritzbar ist.

2. Zahnstangenlenkgetriebe nach Anspruch 1, **dadurch gekennzeichnet, dass** der Nutgrund der Umfangsnut (12) exzentrisch mit unterschiedlicher Tiefe über den Umfang ausgebildet ist.

3. Zahnstangenlenkgetriebe nach Anspruch 1, **dadurch gekennzeichnet, dass** der Dämpfungsring (13) exzentrisch ausgebildet ist.

4. Zahnstangenlenkgetriebe nach Anspruch 1, **dadurch gekennzeichnet, dass** der Dämpfungsring (13) mit ein oder mehreren über den Umfang vorstehenden Erhöhungen (14) versehen ist, die sich über einen Teil der Umfangswand erstrecken.

5. Zahnstangenlenkgetriebe nach Anspruch 4, **dadurch gekennzeichnet, dass** wenigstens zwei umfangsseitig auf Abstand voneinander angeordnete Erhöhungen (14) vorgesehen sind.

6. Zahnstangenlenkgetriebe nach Anspruch 5, **dadurch gekennzeichnet, dass** drei auf Abstand voneinander angeordnete Erhöhungen (14) vorgesehen sind.

7. Zahnstangenlenkgetriebe nach Anspruch 5 oder 6, **dadurch gekennzeichnet, dass** der Abstand zwischen den Erhöhungen (14) zwischen 30 und 90 Grad beträgt.

8. Zahnstangenlenkgetriebe nach einem der Ansprüche 1 bis 7, **dadurch gekennzeichnet, dass** zwei axial auf Abstand voneinander angeordnete Dämpfungsringe (13) an dem Druckstück (4) angeordnet sind.

9. Zahnstangenlenkgetriebe nach einem der Ansprüche 1 bis 8, **dadurch gekennzeichnet, dass** der wenigstens eine Dämpfungsring (13) aus einem elastischen Kunststoff besteht.

10. Zahnstangenlenkgetriebe nach Anspruch 9, **dadurch gekennzeichnet, dass** der wenigstens eine Dämpfungsring (13) aus Silikon besteht.

11. Zahnstangenlenkgetriebe nach einem der Ansprüche 1 bis 10, **dadurch gekennzeichnet, dass** das Druckstück (4) aus einem glasfaserverstärkten Kunststoff besteht.
